# EUROPEAN PATENT APPLICATION

(11) **EP 3 640 054 A1**
(43) Date of publication of application: **22.04.2020**
(21) Application number: 18816578.1
(22) Date of filing: 18.05.2018
(51) Int. Cl.: B60C 9/18, B60C 9/20

(54) **REINFORCEMENT MEMBER AND TIRE USING SAME**

(30) Priority: 12.06.2017 JP 2017115067
(71) Applicant: Bridgestone Corporation, Tokyo 104-8340 (JP)
(72) Inventor: SASAKI, Yosuke, Tokyo 104-8340 (JP)
(74) Representative: Oxley, Robin John George
(86) International application number: PCT/JP2018/019404
(87) International publication number: WO 2018/230264

(57) **Abstract**

The present invention provides: a reinforcement member that includes a core material cord layer and a spiral cord layer including a reinforcement cord and arranged outside the core material cord layer, the reinforcement member being capable of improving tire longevity by suppressing breakage of the reinforcement cord due to fretting (wear) between a core material cord and the reinforcement cord; and a tire using the same. Provided are: a reinforcement member (1) that includes a core material layer (2) and a spiral cord layer (3) including a reinforcement cord (3a) spirally wound around the core material layer (2), in which the core material layer (2) includes a plate-like body made of a resin material having a chamfered end portion in a widthwise direction of the reinforcement member (1); and a tire using the same.

## Description

### TECHNICAL FIELD

The present invention relates to a reinforcement member and a tire using the same, and particularly to a reinforcement member including a core material layer and a spiral cord layer formed by spirally winding a reinforcement cord around the core material layer and to an improvement in a tire using the same.

### BACKGROUND ART

Conventionally, various studies have been conducted on tire reinforcement members. For example, typical as the structure of a belt that is a reinforcement member for a passenger vehicle tire is a structure in which on a tire radial outer side of a crown portion of a carcass serving as a framework member, there are arranged two or more intersecting belt layers, cord directions of whose reinforcement cords intersect each other. Other than this, a belt structure is also known in which upper and lower two belt layers are formed into a spirally winding structure in which organic fiber cords as reinforcement cords are arranged so as to intersect each other, the organic fiber cords being folded back at end portions of the belt layers and extending from one of the layers to the other layer, and between the belt layers including these organic fiber cords is arranged a steel belt layer in which a reinforcement cord including a steel cord is arranged.

As such a structure, for example, Patent Documents 1 and 2 have proposed pneumatic radial tires in which while improving edge separation resistance of belt layers of passenger vehicle pneumatic tires, improvement in other performance of the tires has also been achieved by each defining an alignment angle of a reinforcement cord of a steel belt layer with respect to a tire circumferential direction.

### RELATED ART DOCUMENTS

### PATENT DOCUMENTS

Patent Document 1: JP H10-109502 A
Patent Document 2: JP H10-109503 A

### SUMMARY OF THE INVENTION

### PROBLEMS TO BE SOLVED BY THE INVENTION

Belts proposed in Patent Documents 1 and 2 have a structure including three-layered belts in which a reinforcement member including an organic fiber cord is spirally wound around the steel belt layer, so that durability seems to be ensured to some extent while achieving weight reduction. However, in the tires including the reinforcement member including such a core material cord layer and the spiral cord layer arranged outside the core material cord layer, cut surfaces of the core material cord arranged in an inclined manner are present at end portions of the core material cord layer in a widthwise direction of the reinforcement member, due to which a rubber gauge between the core material cord and the reinforcement cord forming the spiral cord layer is lost by temporal changes in inner pressure, temperature increase, and the like of the tires during traveling, whereby the core material cord and the reinforcement cord come into contact and easily wear against each other in conjunction with rolling. Therefore, it has been desired to improve breakage characteristics of the core material cord and the reinforcement cord even in such a structure so as to further increase tire longevity.

Accordingly, it is an object of the present invention to provide a reinforcement member that includes a core material cord layer and a spiral cord layer arranged outside the core material cord and that is capable of suppressing breakage of a reinforcement cord due to fretting (wear) between a core material cord and the reinforcement cord and a tire having improved tire longevity due to the use of the reinforcement member.

### MEANS FOR SOLVING THE PROBLEMS

As a result of intensive and extensive studies to solve the above problems, the inventor of the present invention found that the above problems can be solved by using a plate-like body made of a resin material having a chamfered end portion in a widthwise direction of a reinforcement member, instead of a core material cord layer formed by coating a core material cord with rubber, thereby having completed the present invention.

Specifically, the present invention is a reinforcement member that includes a core material layer and a spiral cord layer including a reinforcement cord spirally wound around the core material layer, the reinforcement member being characterized in that the core material layer includes a plate-like body made of a resin material, an end portion of the plate-like body in a widthwise direction of the reinforcement member being chamfered.

In the reinforcement member of the present invention, the end portion of the plate-like body in the widthwise direction of the reinforcement member may be cut into a semicircular cross-section, or may be melt-processed. The reinforcement member of the present invention is particularly suitable as a tire reinforcement member.

A tire of the present invention is characterized by using the above reinforcement member of the present invention.

### EFFECTS OF THE INVENTION

The present invention has achieved provision of a reinforcement member capable of suppressing breakage of a reinforcement cord of a spiral cord layer due to fretting (wear) of the reinforcement cord and a tire whose tire longevity is improved by using the same.

### BRIEF DESCRIPTION OF THE DRAWINGS

FIG. 1 is a widthwise cross-sectional view illustrating one example of a reinforcement member of the present invention;
FIG. 2 is a widthwise partial cross-sectional view illustrating one example of the reinforcement member of the present invention;
FIG. 3 is a widthwise partial cross-sectional view illustrating another example of the reinforcement member of the present invention;
FIG. 4 is a tire widthwise cross-sectional view illustrating one example of a passenger vehicle tire of the present invention;
FIG. 5 is a tire widthwise cross-sectional view illustrating one example of a truck and bus tire of the present invention; and
FIG. 6 is a tire widthwise cross-sectional view illustrating one example of a construction vehicle tire of the present invention.

### MODE FOR CARRYING OUT THE INVENTION

Hereinafter, the present invention will be described in detail by using the drawings.

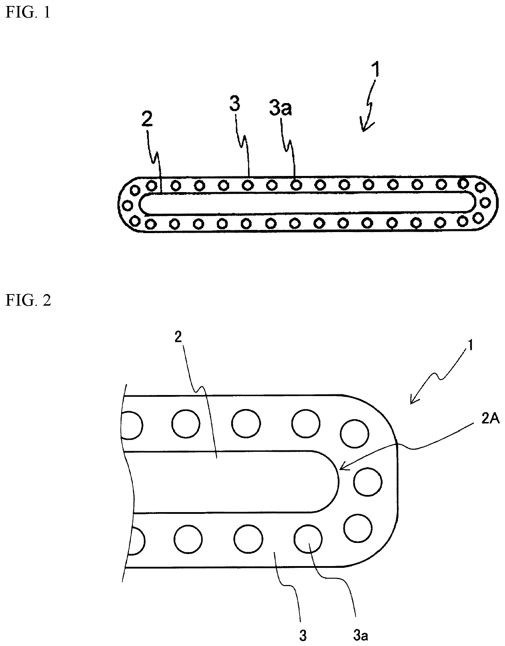

FIG. 1 is a widthwise cross-sectional view illustrating one example of a reinforcement member of the present invention. As illustrated, a reinforcement member 1 of the present invention includes at least one core material layer 2 and a spiral cord layer 3 including a reinforcement cord 3a spirally wound around the core material layer 2.

The reinforcement member 1 of the present invention is characterized in that the core material layer 2 includes a plate-like body made of a resin material having a chamfered end portion in a widthwise direction of the reinforcement member 1. Since the core material cord forming the conventional core material cord layer was inclined to a longitudinal direction of the reinforcement member 1, end faces of the core material cord, particularly, cut surfaces thereof were exposed at the end portions of the core material cord layer in the widthwise direction of the reinforcement member, due to which there was a possibility that rubber interposed therebetween was worn away due to traveling, and the cut surfaces of the core material cord and the reinforcement cord 3a of the spiral cord layer 3 on the outside thereof could contact with and wear against each other, thereby causing breakage of the reinforcement cord 3a. By contrast with this, the present invention has used the plate-like body made of a resin material having a chamfered end portion in the widthwise direction of the reinforcement member 1 as the core material layer 2, instead of the core material cord layer using the core material cord, so that contact pressure between the plate-like body and the reinforcement cord during traveling is reduced, enabling suppression of damage to the reinforcement cord 3a when wear occurs therebetween. Thus, breakage of the reinforcement cord 3a is suppressed, which can contribute to increased longevity of the tire. Additionally, the plate-like body made of a resin material is lighter in weight than a rubber-cord composite body having the same volume, which thus can contribute to a weight reduction of the reinforcement member 1, and eventually to a weight reduction of the tire. Furthermore, since the core material layer 2 is made of a resin material, there is no rigidity reduction.

In the plate-like body forming the core material layer 2 in the present invention, the effects of the present invention can be obtained as long as an end portion thereof in the widthwise direction of the reinforcement member 1 is chamfered to be rounded. Specifically, for example, there can be mentioned a method of processing an end portion of the plate-like body in the widthwise direction of the reinforcement member 1 by cutting processing or melt processing.

When processing a widthwise end portion of the plate-like body by cutting processing, for example, as illustrated in a widthwise partial cross-sectional view of one example of the reinforcement member in FIG. 2, an end portion 2A of the plate-like body that is the core material layer 2 in the widthwise direction of the reinforcement member 1 can be cut into a semicircular cross-section in the entire part along the longitudinal direction of the reinforcement member 1. In this way, cutting the end portion 2A of the plate-like body in the widthwise direction of the reinforcement member 1 into the semicircular cross-section can reduce the contact pressure between the core material and the reinforcement cord, thereby enabling suppression of breakage of the reinforcement cord 3a forming the spiral cord layer 3.

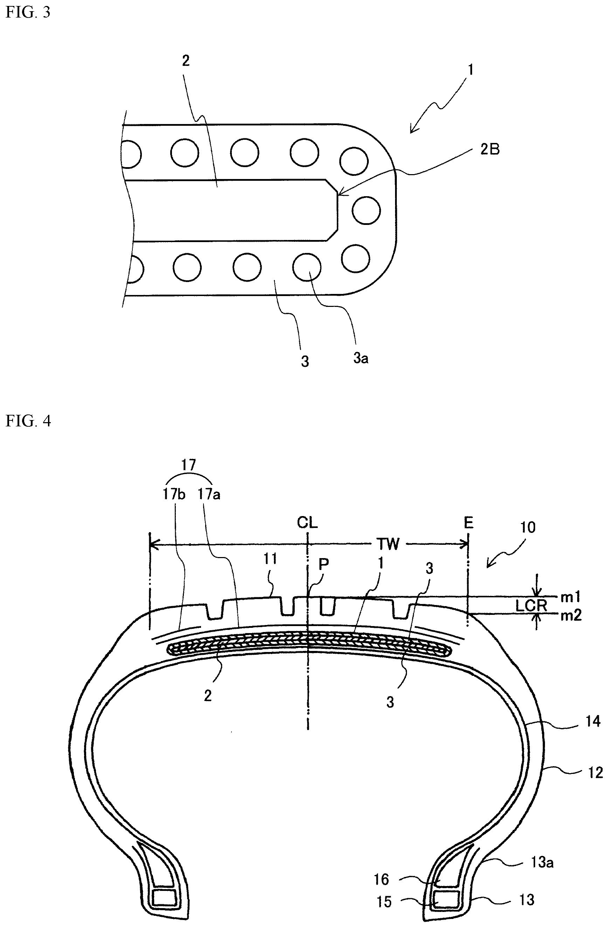

When processing a widthwise end portion of the plate-like body by cutting processing, for example, as illustrated in a widthwise partial cross-sectional view of another example of the reinforcement member in FIG. 3, two corner portions in a widthwise cross-section of an end portion 2B of the plate-like body that is the core material layer 2 can be cut so as to be linearly chamfered in the entire part along the longitudinal direction of the reinforcement member 1.

Alternatively, when processing a widthwise end portion of the plate-like body by melt processing, it is possible to use a method of heating and melting the plate-like body at a processing temperature in accordance with a melting point of the resin material forming the plate-like body. This method similarly can chamfer and round an end portion of the plate-like body that is the core material layer 2 in the widthwise direction of the reinforcement member 1.

In the present invention, the resin material forming the plate-like body serving as the core material layer 2 may be any resin material that does not melt at vulcanization temperature, and can be used by appropriately selecting from among general-purpose thermoplastic resins and thermosetting resins.

In the present invention, even when only one side end portion of the plate-like body that is the core material layer 2 in the widthwise direction of the reinforcement member 1 is chamfered, it is possible to obtain the effect of suppressing breakage of the reinforcement cord 3a. However, it is preferable that both side end portions thereof in the widthwise direction of the reinforcement member 1 are chamfered, from the viewpoint of further improving the effect of suppressing breakage of the reinforcement cord.

The reinforcement member 1 of the present invention may be any one in which an end portion of the plate-like body that is the core material layer 2 in the widthwise direction of the reinforcement member has been chamfered and rounded, whereby the desired effects of the present invention can be obtained. In the reinforcement member 1 of the present invention, conditions including the material of the reinforcement cord 3a forming the spiral cord layer 3, the structures of the core material layer 2 and the spiral cord layer 3, and the like can be appropriately selected as desired, and are not particularly limited.

The thickness of the plate-like body that is the core material layer 2 is preferably from 1 to 3 mm, and more preferably from 1 to 2 mm. When the thickness of the plate-like body is set in the above range, it is possible to apply a core material layer having sufficient compression rigidity, as well as when winding a strip (a rubber-cord composite body) around the core material layer, a winding radius R of the strip at widthwise end portions of the core material layer can be largely obtained to some extent, so that winding performance of the strip can be sufficiently ensured.

Additionally, in the present invention, the spiral cord layer 3 is formed by spirally winding a rubber-cord composite body formed by aligning one or plural, for example, 2 to 100 reinforcement cords 3a in parallel and coating with rubber, around the periphery of the core material layer 2. The cord count of the reinforcement cords in the spiral cord layer 3 is, for example, preferably in a range of from 5 to 60/50 mm.

In the present invention, the reinforcement cord 3a of the spiral cord layer 3 preferably has an inclination angle of from 10 to 45° with respect to a tire circumferential direction. By having such a structure, elongation of the spiral cord layer 3 in the tire circumferential direction can be suppressed. The above angle is suitably from 15 to 30°.

In the present invention, the material of the reinforcement cord 3a of the spiral cord layer 3 is not particularly limited, and conventional general-purpose various kinds of metal cords, organic fiber cords, or the like can be used as appropriate. Specifically, for example, as a metal cord, a steel filament or a steel cord obtained by twisting together a plurality of steel filaments is preferably used in terms of cost and strength. The twisting structure of the steel cord can also be variously designed, and it is possible to use various cross-sectional structures, twisting pitches, twisting directions, and distances between adjacent filaments. As a cross-sectional structure, various twisting structures can be employed, such as single twisting, layer twisting, and multi-twisting, and a cord having a flat cross-sectional shape can be used. Furthermore, it is also possible to employ a cord formed by twisting together filaments different in material. Note that the steel filaments forming the steel cord may contain iron as a main component and various trace components such as carbon, manganese, silicon, phosphorus, sulfur, copper, and chromium. Additionally, surfaces of the steel filaments may be brass-plated to improve adhesion to rubber.

In addition, as an organic fiber, an aramid fiber (aromatic polyamide fiber), a polyketone (PK) fiber, a polyparaphenylene benzobisoxazole (PBO) fiber, a polyarylate fiber, or the like can be used. Additionally, a carbon fiber (carbon fiber CF) such as a polyacrylonitrile (PAN)-based carbon fiber, a pitch-based carbon fiber, or a rayon-based carbon fiber, a glass fiber (glass fiber), or a rock fiber (rock wool) such as a basalt fiber or an andesite fiber can be used. Note that these reinforcement cords are preferably adhesive-processed to improve adhesion to rubber. The adhesive-processing can be performed according to a conventional method by using a general-purpose adhesive such as an RFL-based adhesive. Furthermore, a hybrid cord including any two or more kinds of those mentioned above may be used, or a cord including a hybrid fiber such as an organic fiber partially including a metal fiber can be used.

Particularly, use of an organic fiber cord made of an aramid fiber or the like as the reinforcement cord 3a of the spiral cord layer 3 easily causes breakage of the reinforcement cord 3a due to fretting against the core material layer 2, so that it is useful to apply the present invention.

In the present invention, as a rubber composition to be used for a coating rubber of the spiral cord layer 3, a known one can be used, and there is no particular limitation. For example, as a rubber component of the rubber composition to be used as the coating rubber, all known rubber components, besides natural rubber, can be used, such as synthetic rubbers such as vinyl aromatic hydrocarbon-conjugated diene copolymers, polyisoprene rubbers, butadiene rubbers, butyl rubbers, halogenated butyl rubbers, and ethylene-propylene rubbers. The rubber components may be used alone or in combination of two or more kinds thereof. From the viewpoints of adhesion characteristics to the metal cord and breakage characteristics of the rubber composition, preferably, the rubber component may include e at least one of natural rubber and polyisoprene rubber or may include 50% by mass or more of natural rubber and the rest including synthetic rubber.

In the present invention, compounding agents usually used in the rubber industries, such as fillers such as carbon black and silica, softeners such as aromatic oil, methylene donors such as methoxymethylated melamines such as hexamethylenetetramine, pentamethoxymethylmelamine, and hexamethylenemethylmelamine, vulcanization accelerators, vulcanization accelerator auxiliary agents, and anti-aging agents, can be compounded as appropriate in usual compounding amounts in the rubber composition to be used for the coating rubber. Additionally, in the present invention, the method for preparing the rubber composition to be used for the coating rubber is not particularly limited, so that preparation may be performed according to a conventional method, for example, by kneading sulfur, organic acid cobalt salt and various compounding agents or the like into the rubber component by using a Banbury mixer, a roll, or the like.

The reinforcement member 1 of the present invention can be used for reinforcement of rubber products such as tires, and, particularly, can be suitably used as a tire reinforcement member, for example, a tire reinforcement member for passenger vehicles, trucks and buses, construction vehicles, motorcycles, airplanes, and agriculture. Additionally, the tires are not limited to pneumatic tires, and the reinforcement member 1 can also be used as a reinforcement member for solid tires and non-pneumatic tires. Note that the portion for applying the reinforcement member 1 of the present invention is not particularly limited. For example, it is a belt that covers a large part of the tread portion. The reinforcement member 1 of the present invention has improved rigidity in the longitudinal direction, and simultaneously has improved rigidity in the widthwise direction. Thus, using the reinforcement member 1 of the present invention as the belt enables, besides suppression of interlayer separation in the belt due to repeated input and suppression of cord breakage due to stepping on an obstacle on a road, suppression of cracks that occur in a groove bottom by reduction in distortion of the groove bottom due to inner pressure and temporal changes, whereby wear rate and uneven wear of the tire can be suppressed.

The reinforcement member 1 of the present invention may be used, for example, only for local reinforcement of a part of the tread portion, other than the belt. For example, it is also possible to use only for local reinforcement of the vicinity of a tread end portion, the vicinity of the equatorial plane, or the vicinity of a groove bottom. Note that, other than using the reinforcement member of the present invention alone, a plurality of reinforcement members may be used by arranging side by side in the tire widthwise direction, and may be spirally wound in the circumferential direction while shifting in the tire widthwise direction to cover the tread portion.

Next, a tire of the present invention will be described.

The tire of the present invention includes the reinforcement member 1 of the present invention, and there can be mentioned tires for passenger vehicles, trucks and buses, construction vehicles, motorcycles, airplanes, and agriculture. Suitable tires are those for passenger vehicles, trucks and buses, and construction vehicles. Additionally, the tire of the present invention is not limited to a pneumatic tire, and the reinforcement member 1 can be used as a reinforcement member of a solid tire or a non-pneumatic tire.

The portion for applying the reinforcement member 1 of the present invention is not particularly limited, and as described above, for example, is suitable as a belt that covers the large part of the tread portion. Using the reinforcement member 1 of the present invention as the belt enables suppression of cracks that occur in a groove bottom by reduction in distortion of the groove bottom due to inner pressure and temporal changes, whereby wear rate and uneven wear of the tire can be suppressed. Other than this, the reinforcement member 1 of the present invention may be used, for example, only for local reinforcement of a part of the tread, and, for example, it is also possible to use only for local reinforcement of the vicinity of the tread end portion, the vicinity of the equatorial plane, or the vicinity of a groove bottom. Note that, other than using the reinforcement member 1 of the present invention alone, a plurality of reinforcement members 1 may be arranged side by side in the tire widthwise direction, and may be spirally wound in the circumferential direction while shifting in the tire widthwise direction to cover the tread portion.

FIG. 4 is a tire widthwise cross-sectional view illustrating one structural example of a passenger vehicle tire of the present invention. A passenger vehicle tire 10 illustrated includes a tread portion 11 forming a grounded portion, a pair of sidewall portions 12 continuous to both side portions of the tread portion 11 and extending inward in a tire radial direction, and a bead portion 13 continuous to an inner peripheral side of each of the sidewall portions 12. The tread portion 11, the sidewall portions 12, and the bead portions 13 are reinforced by a carcass 14 including one sheet of carcass ply extending in a toroidal shape from one of the bead portions 13 to the other bead portion 13. Additionally, in the illustrated passenger vehicle tire 10, bead cores 15 are each embedded in the pair of bead portions 13, and the carcass 14 is folded back around the bead cores 15 from the inside of the tire to the outside thereof, and retained. Furthermore, a bead filler 16 is arranged on tire radial outer sides of the bead cores 15.

In the illustrated passenger vehicle tire 10, the reinforcement member 1 of the present invention is arranged on a tire radial outer side of a crown portion of the carcass 14. In the present invention, the core material layer 2 forming the reinforcement member 1 may be any core material layer that uses a plate-like body made of a resin material having a chamfered end portion in the widthwise direction of the reinforcement member 1, whereby there can be obtained a tire in which reduction in tire longevity due to the reinforcement member 1 is suppressed.

In the passenger vehicle tire 10 of the present invention, the carcass 14 can employ various structures including the conventional structures, and may be either of a radial structure or of a bias structure. As the carcass 14, preferably, one or two layers of carcass ply including an organic fiber cord layer are used. Additionally, a maximum width position of the carcass 14 in the tire radial direction may be, for example, closer to the bead portion 13 sides or the tread portion 11 side. For example, the maximum width position of the carcass 14 can be provided in a range of 50% to 90% relative to a tire height on the tire radial outer sides from bead base portions. In addition, as illustrated, the carcass 14 is typically and preferably structured so as to extend uninterruptedly between the pair of bead cores 15, but can also be formed by using a pair of sheets of carcass ply extending from the bead cores 15 and interrupted near the tread portion 11 (unillustrated).

In addition, folded back portions of the carcass 14 can employ various structures. For example, each folded back end of the carcass 14 can be positioned on a further tire radial inner side than an upper end of the bead filler 16, or the each folded back end of the carcass 14 may be extended to a further tire radial outer side than the upper end of the bead filler 16 or a tire maximum width position, and in this case, the folded back end thereof can be extended to a further tire widthwise inner side than a tire widthwise end of the reinforcement member 1. Furthermore, when the carcass ply includes a plurality of layers, positions of the folded back ends of the carcass 14 in the tire radial direction can be made different. Alternatively, there may be employed a structure in which, without providing any folded back portions of the carcass 14, a plurality of bead core members sandwich the carcass 14 or a structure in which the carcass 14 is wound around the bead cores 15. Note that the cord count of the carcass 14 is typically in a range of from 10 to 60/50 mm, but not limited thereto.

The passenger vehicle tire 10 of the present invention may further include another belt layer (unillustrated), in addition to the belt layers including the reinforcement member 1 of the present invention. The other belt layer may include a rubberized layer of a reinforcement cord, and can be an inclined belt having a predetermined angle with respect to the tire circumferential direction. The other belt layer may be arranged on the tire radial outer side or inner side of the belt layer 1. As the reinforcement cord of the inclined belt layer, for example, a metal cord, particularly, a steel cord is most commonly used, but an organic fiber cord may be used. A steel cord can be used that includes steel filaments containing iron as a main component and various trace inclusions such as carbon, manganese, silicon, phosphorus, sulfur, copper, and chromium.

As the steel cord, besides a cord formed by twisting together a plurality of filaments, a steel monofilament cord may also be used. Note that the twisting structure of the steel cord can also be variously designed, and it is possible to use various cross-sectional structures, twisting pitches, twisting directions, and distances between adjacent steel cords. Additionally, a cord formed by twisting together filaments different in material can also be employed, in which the cross-sectional structure thereof is not particularly limited, and various twisting structures can be employed, such as single twisting, layer twisting, and multi-twisting. Note that the reinforcement cord of the other belt layer has an inclination angle of preferably 10° or more with respect to the tire circumferential direction. In addition, when providing the other belt layer, the width of a maximum width inclined belt layer largest in width is preferably from 90% to 115% of a tread width, and particularly preferably from 100% to 105% thereof.

Additionally, in the passenger vehicle tire of the present invention, a belt reinforcing layer 17 may be provided on the tire radial outer side of the reinforcement member 1 of the present invention. As the belt reinforcing layer 17, there may be mentioned a cap layer 17a arranged over the entire width or more of the reinforcement member 1 and a layered layer 17b arranged in regions covering both end portions of the reinforcement member 1. The cap layer 17a and the layered layer 17b are usually formed by spirally winding, in the tire circumferential direction, a strip having a constant width including multiple cords aligned and coated with rubber. The cap layer 17a and the layered layer 17b, respectively, may be provided alone or may be used in combination. Alternatively, a combination of two or more cap layers and two or more layered layers may be used.

Various materials can be employed for a reinforcement cord of the cap layer 17a and the layered layer 17b, and as representative examples thereof, there can be mentioned rayon, nylon, polyethylene naphthalate (PEN), polyethylene terephthalate (PET), aramid, glass fiber, carbon fiber, steel, and the like. In terms of weight reduction, an organic fiber cord is particularly preferable. As the reinforcement cord, a monofilament cord, a cord formed by twisting together a plurality of filaments, or, furthermore, a hybrid cord formed by twisting together filaments different in material can also be employed. Additionally, as the reinforcement cord, a wavy cord may be used to enhance breakage strength. Similarly, to enhance breakage strength, for example, a high elongation cord may be used that has an elongation at break of from 4.5 to 5.5%.

When providing the cap layer 17a in the passenger vehicle tire 10 of the present invention, the width of the cap layer 17a may be wider or narrower than the inclined belt layers. For example, the width thereof can be from 90% to 110% of the maximum width inclined belt layer largest in width among the inclined belt layers. The cord counts of the cap layer 17a and the layered layer 17b are typically in a range of from 20 to 60/50 mm, but not limited thereto. For example, in the cap layer 17a, also, distributions of rigidity, material, the number of layers, cord density, and the like can be arranged in the tire widthwise direction, in which, for example, the number of layers can be increased only at the end portions in the tire widthwise direction, or the number of layers can be increased only at a center portion.

From the viewpoint of manufacturing, it is particularly advantageous to form the cap layer 17a and the layered layer 17b as spiral layers. In this case, the spiral layers may be formed by strip-shaped cords each including a plurality of core wires arranged in parallel to each other in a plane and bundled by a wrapping wire while maintaining the above parallel arrangement.

In a case where the passenger vehicle tire 10 of the present invention is a passenger vehicle tire whose tread portion 11 has a shape with a narrow-width and large-diameter size, when, in a tire widthwise cross-section, a straight line passing through a point P on a tread surface on a tire equatorial plane CL and parallel to the tire widthwise direction is defined as m1, a straight line passing through a ground contact end E and parallel to the tire widthwise direction is defined as m2, a distance between the straight line m1 and the straight line m2 in the tire radial direction is defined as fall height LCR, and the tread width of the tire is defined as TW, it is preferable to set to a ratio of LCR/TW to 0.045 or less. By setting the ratio of LCR/TW in the above range, the crown portion of the tire becomes flat (flattened), whereby the ground contact area is increased to alleviate input (pressure) from the road surface and reduce deflection rate in the tire radial direction, so that durability and wear resistance of the tire can be improved. Additionally, preferably, the tread end portions are smooth.

In addition, the tread pattern may be a full lug pattern, a rib-like land portion-based pattern, a block pattern, or an asymmetric pattern, or may have a designated rotation direction.

The full lug pattern may be a pattern including widthwise grooves extending in the tire width direction from the vicinity of the equatorial plane to the ground contact ends, and, in this case, no circumferential groove has to be included. Such a pattern mainly including lateral grooves can effectively exert, particularly, on-snow performance.

The rib-like land portion-based pattern is a pattern mainly formed by rib-like land portions partitioned in the tire widthwise direction by one or more circumferential grooves or by the circumferential grooves and the tread end portions. Here, the "rib-like land portions" refer to land portions including no lateral groove traversing in the tire widthwise direction and extending in the tire circumferential direction. However, the rib-like land portions may include sipes and lateral grooves terminating in the rib-like land portions. Since a radial tire has a high ground contact pressure, particularly, when used at high inner pressure, increased circumferential shear rigidity seems to improve ground contact performance on a wet road surface. An example of the rib-like land portion-based pattern can be a tread pattern including only rib-like land portions in a region of 80% of the tread width centering on the equatorial plane, i.e., a pattern without any lateral grooves. In such a pattern, drainage performance in this region greatly contributes, particularly, to wet performance.

The block pattern is a pattern including block land portions partitioned by the circumferential groove(s) and the widthwise groove(s), and a tire with the block pattern is excellent in basic on-ice performance and on-snow performance.

The asymmetric pattern is a pattern in which right and left tread patterns are asymmetric with respect to the equatorial plane. For example, in the case of a tire having a designated mounting direction, the tire may have a structure such that negative ratio is different between half portions of the tire on the inner side in the vehicle mounting direction and the outer side in the vehicle mounting direction from the equatorial plane or a structure such that the number of circumferential grooves are different between the half portions of the tire on the inner side in the vehicle mounting direction and the outer side in the vehicle mounting direction from the equatorial plane.

The tread rubber is not particularly limited. Any conventionally used rubber can be used, and foam rubber may be used. In addition, the tread rubber may be formed by a plurality of rubber layers different in the tire radial direction, and for example, may have a so-called cap-base structure. As the plurality of rubber layers, those different in loss tangent, modulus, hardness, glass transition temperature, material, and the like can be used. Additionally, the thickness ratio of the plurality of rubber layers in the tire radial direction may be changed in the tire widthwise direction, and only the circumferential groove bottom(s) or the like can be formed by rubber layer(s) different from the surroundings thereof.

Furthermore, the tread rubber may be formed by a plurality of rubber layers different in the tire widthwise direction, and may have a so-called divided tread structure. As the above plurality of rubber layers, those different in loss tangent, modulus, hardness, glass transition temperature, material, and the like can be used. Additionally, the length ratio of the plurality of rubber layers in the tire widthwise direction may be varied in the tire radial direction, and only a limited partial region, such as only the vicinity of the circumferential groove bottom(s), only the vicinity of the tread ends, only shoulder land portions, or only a center land portion, can be formed by rubber layer(s) different from the surroundings thereof.

In the passenger vehicle tire 10 of the present invention, the structure of the sidewall portions 12 also can employ a known structure. For example, the tire maximum width position can be provided in a range of from 50% to 90% relative to a tire height on the tire radial outer sides from bead base portions. Additionally, a structure with a rim guard may be used. In the passenger vehicle tire 10 of the present invention, preferably, a recessed portion 13a to be contacted with a rim flange is formed.

Additionally, the bead cores 15 can employ various structures such as circular shapes and polygonal shapes. Note that, as described above, the bead portions 13 may be structured such that the carcass 14 is wound around the bead cores 15 or the carcass 14 is sandwiched by the plurality of bead core members. While the bead fillers 16 are arranged on the tire radial outer sides of the bead cores 15 in the illustrated passenger vehicle tire 10, the bead fillers 16 may be omitted in the passenger vehicle tire 10 of the present invention.

Although not illustrated, the passenger vehicle tire 10 of the present invention may usually provide an inner liner on an innermost layer of the tire. The inner liner can be formed by a film layer mainly composed of resin, other than a rubber layer mainly composed of butyl rubber. Additionally, although not illustrated, a porous member can be arranged or electrostatic flocking processing can be performed on an inner surface of the tire to reduce cavity resonance noise. Furthermore, the inner surface of the tire can be provided with a sealant member for preventing air leakage at the time of puncture.

The use of the passenger vehicle tire 10 is not particularly limited. The passenger vehicle tire 10 can be applied to tires for summer, for all seasons, and for winter. The passenger vehicle tire 10 can be used as a passenger vehicle tire having a special structure, such as a side-reinforced run-flat tire provided with a crescent-shaped reinforcement rubber layer in the sidewall portions 12 or a studded tire.

Next, a truck and bus tire of the present invention will be described.

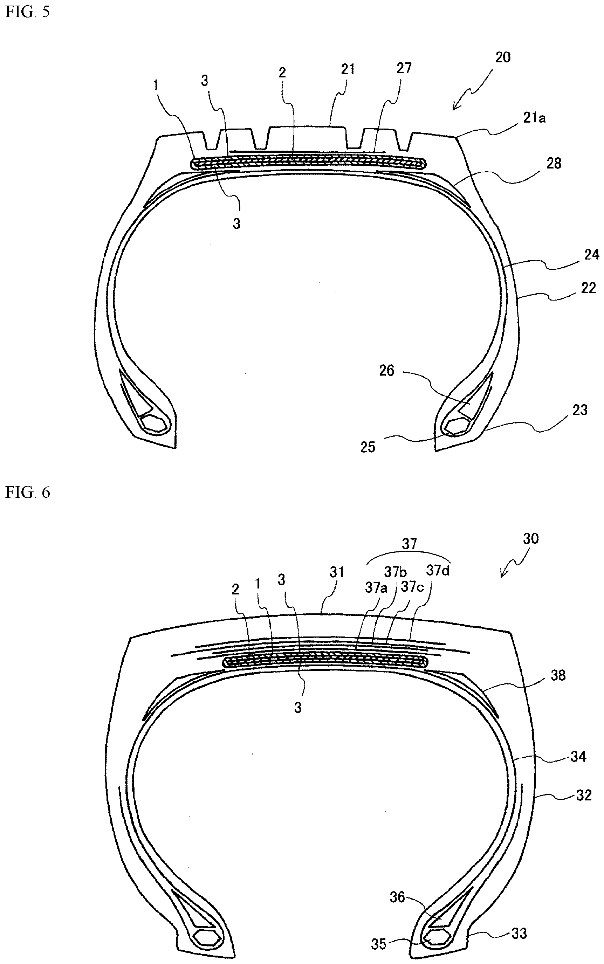

FIG. 5 is a tire widthwise cross-sectional view illustrating one structural example of a truck and bus tire as one example of the tire of the present invention. A truck and bus tire 20 illustrated includes a tread portion 21 forming a ground contact portion, a pair of sidewall portions 22 continuous to both side portions of the tread portion 21 and extending inward in a tire radial direction, and a bead portion 23 continuous to an inner peripheral side of each of the sidewall portions 22. The tread portion 21, the sidewall portions 22, and the bead portions 23 are reinforced by a carcass 24 including one sheet of carcass ply extending in a toroidal shape from one of the bead portions 23 to the other bead portion 23. Note that, in the illustrated truck and bus tire 20, bead cores 25 are each embedded in the pair of bead portions 23, and the carcass 24 is folded back around the bead cores 25 from the inside of the tire to the outside thereof, and then retained. Furthermore, a bead filler 26 is arranged on tire radial outer sides of the bead cores 25.

In the illustrated truck and bus tire 20, the reinforcement member 1 of the present invention is arranged on a tire radial outer side of a crown portion of the carcass 24. In the present invention, the core material layer 2 forming the reinforcement member 1 may be any core material layer that uses a plate-like body made of a resin material having a chamfered end portion in the widthwise direction of the reinforcement member 1, whereby there can be obtained a tire in which reduction of tire longevity due to the reinforcement member 1 is suppressed.

In the truck and bus tire 20 of the present invention, the carcass 24 can employ various structures including the conventional structures, and may be either of a radial structure or of a bias structure. As the carcass 24, preferably, one or two layers of carcass ply including a steel cord layer are used. Additionally, for example, a carcass maximum width position in the tire radial direction may be closer to the bead portion 23 sides or the tread portion 21 side. For example, the maximum width position of the carcass 24 can be provided in a range of from 50% to 90% relative to a tire height on the tire radial outer sides from bead base portions. Additionally, as illustrated, the carcass 24 is typically and preferably structured so as to extend uninterruptedly between the pair of bead cores 25, but can also be formed by using a pair of carcass pieces extending from the bead cores 25 and interrupted near the tread portion 21.

Additionally, folded back portions of the carcass 24 can employ various structures. For example, each folded back end of the carcass 24 can be positioned on a further tire radial inner side than an upper end of the bead filler 26, or the each carcass folded back end can be extended to a further tire radial outer side than the upper end of the bead filler 26 or the tire maximum width position, and in this case, the each carcass folded back end can be extended to a further tire widthwise inner side than a tire widthwise end of the reinforcement member 1. Furthermore, when the carcass ply includes a plurality of layers, positions of the folded back ends of the carcass 24 in the tire radial direction can be made different. Alternatively, there may be employed a structure in which, without providing any folded back portions of the carcass 24, a plurality of bead core members sandwich the carcass 24 or a structure in which the carcass 24 is wound around the bead cores 25. Note that the cord count of the carcass 24 is typically in a range of from 5 to 60/50 mm, but not limited thereto.

The truck and bus tire 20 of the present invention may further include another belt layer 27, as illustrated, in addition to the belt layers including the reinforcement member 1 of the present invention. The other belt layer may include a rubberized layer of a reinforcement cord, and can be an inclined belt having a predetermined angle with respect to the tire circumferential direction. As the reinforcement cord of the inclined belt layer, for example, a metal cord, particularly, a steel cord is most commonly used, but an organic fiber cord may be used. A steel cord can be used that includes steel filaments containing iron as a main component and various trace inclusions such as carbon, manganese, silicon, phosphorus, sulfur, copper, and chromium.

As the steel cord, besides a cord formed by twisting together a plurality of filaments, a steel monofilament cord may be used. Note that the twisting structure of the steel cord can also be variously designed, and it is possible to use various cross-sectional structures, twisting pitches, twisting directions, and distances between adjacent steel cords. Additionally, a cord formed by twisting together filaments different in material can also be employed, in which the cross-sectional structure thereof is not particularly limited, and various twisting structures can be employed, such as single twisting, layer twisting, and multi-twisting. Note that the reinforcement cord of the other belt layer has an inclination angle of preferably 0° or more with respect to the tire circumferential direction. Additionally, when providing the other belt layer, a maximum width inclined belt layer largest in width has a width of preferably from 40% to 115% of the tread width, and particularly preferably from 50% to 70% thereof. Note that a belt under cushion rubber 28 is preferably provided on tire radial inner sides of end portions of the belt layer 27. By doing this, distortion and temperature of the end portions of the belt layer 27 can be reduced, so that durability of the tire can be improved.

In addition, in the truck and bus tire 20 of the present invention, a circumferential cord layer (unillustrated) may be provided on a tire radial outer side of the reinforcement member 1 of the present invention and the other belt layer 27.

In the truck and bus tire 20 of the present invention, the structure of the sidewall portions 22 also can employ a known structure. For example, a tire maximum width position can be provided in a range of from 50% to 90% relative to a tire height on the tire radial outer sides from bead base portions. In the truck and bus tire 20 of the present invention, it is preferable that each side wall portion 22 is formed as a smooth curve protruding in the tire widthwise direction, without formation of any recessed portion to be contacted with a rim flange, unlike the passenger vehicle tire.

Additionally, the bead cores 25 can employ various structures such as circular shapes and polygonal shapes. Note that, as described above, the bead portions 23 may be structured such that the carcass 24 is wound around the bead cores 25 or the carcass 24 is sandwiched by the plurality of bead core members. While the bead fillers 26 are arranged on the tire radial outer sides of the bead cores 25 in the illustrated truck and bus tire 20, the bead fillers 26 may be formed by a plurality of rubber members separated in the tire radial direction.

In the truck and bus tire 20 of the present invention, the tread pattern may be a rib-like land portion-based pattern, a block pattern, or an asymmetric pattern, or may have a designated rotation direction.

The rib-like land portion-based pattern is a pattern mainly formed by rib-like land portions partitioned in the tire widthwise direction by one or more circumferential grooves or by the circumferential grooves and the tread end portions. Here, the "rib-like land portions" refer to land portions including no lateral groove traversing in the tire widthwise direction and extending in the tire circumferential direction, but the rib-like land portions may include sipes and lateral grooves terminating in the rib-like land portions. Since a radial tire has a high ground contact pressure, particularly, when used at high inner pressure, increased circumferential shear rigidity seems to improve ground contact performance on a wet road surface. An example of the rib-like land portion-based pattern can be a tread pattern including only rib-like land portions in a region of 80% of the tread width centering on the equatorial plane, i.e., a pattern without any lateral grooves. In such a pattern, drainage performance in this region greatly contributes, particularly, to wet performance.

The block pattern is a pattern including block land portions partitioned by the circumferential groove(s) and the widthwise groove(s), and a tire with the block pattern is excellent in basic on-ice performance and on-snow performance.

The asymmetric pattern is a pattern in which right and left tread patterns are asymmetric with respect to the equatorial plane. For example, in the case of a tire having a designated mounting direction, the tire may have a structure such that negative ratio is different between half portions of the tire on the inner side in the vehicle mounting direction and the outer side in the vehicle mounting direction from the equatorial plane or a structure such that the number of circumferential grooves are different between the half portions of the tire on the inner side in the vehicle mounting direction and the outer side in the vehicle mounting direction from the equatorial plane.

The tread rubber is not particularly limited. Any conventionally used rubber can be used, and foam rubber may be used. In addition, the tread rubber may be formed by a plurality of rubber layers different in the tire radial direction, and for example, may have a so-called cap-base structure. As the plurality of rubber layers, those different in loss tangent, modulus, hardness, glass transition temperature, material, and the like can be used. Additionally, the thickness ratio of the plurality of rubber layers in the tire radial direction may be changed in the tire widthwise direction, and only the circumferential groove bottom(s) or the like can be formed by rubber layer(s) different from the surroundings thereof.

Furthermore, the tread rubber may be formed by a plurality of rubber layers different in the tire widthwise direction, and may have a so-called divided tread structure. As the above plurality of rubber layers, those different in loss tangent, modulus, hardness, glass transition temperature, material, and the like can be used. In addition, the length ratio of the plurality of rubber layers in the tire widthwise direction may be changed in the tire radial direction, and only a limited partial region, such as only the vicinity of the circumferential groove bottom(s), only the vicinity of the tread ends, only shoulder land portions, or only a center land portion, can be formed by rubber layer(s) different from the surroundings thereof. Additionally, in the tread portion, a corner portion 21a is preferably formed at end portions thereof in the tire widthwise direction.

Next, a construction vehicle tire of the present invention will be described.

FIG. 6 is a tire widthwise cross-sectional view illustrating one structural example of a construction vehicle tire as one example of the tire of the present invention. A construction vehicle tire 30 illustrated includes a tread portion 31 forming a ground contact portion, a pair of sidewall portions 32 continuous to both side portions of the tread portion 31 and extending inward in a tire radial direction, and a bead portion 33 continuous to an inner peripheral side of each of the side wall portions 32. The tread portion 31, the sidewall portions 32, and the bead portions 33 are reinforced by a carcass 34 including one sheet of carcass ply extending in a toroidal shape from one of the bead portions 33 to the other bead portion 33. Note that in the illustrated construction vehicle tire 30, bead cores 35 are each embedded in the pair of bead portions 33, and the carcass 34 is folded back around the bead cores 35 from the inside of the tire to the outside thereof, and then retained. Furthermore, a bead filler 36 is arranged on tire radial outer sides of the bead cores 35.

In the illustrated construction vehicle tire 30, the reinforcement member 1 of the present invention is arranged on a tire radial outer side of a crown portion of the carcass 34. In the present invention, the core material layer 2 forming the reinforcement member 1 may be any core material layer that uses a plate-like body made of a resin material having a chamfered end portion in the widthwise direction of the reinforcement member 1, whereby there can be obtained a tire in which reduction of tire longevity due to the reinforcement member 1 is suppressed.

In the illustrated construction vehicle tire 30, furthermore, four belt layers 37a to 37d are sequentially arranged outside the reinforcement member 1. In general, construction vehicle tires include four or six belt layers. In the case of a tire including six belt layers, a first belt layer and a second belt layer form an inner intersecting belt layer group, a third belt layer and a fourth belt layer form an intermediate intersecting belt layer group, and a fifth belt layer and a sixth belt layer form an outer intersecting belt layer group. In the illustrated construction vehicle tire 30, the inner intersecting belt layer group is replaced by the reinforcement member 1 of the present invention, and the belt layers 37a to 37d are arranged as the intermediate intersecting belt layer group and the outer intersecting belt layer group. However, in the present invention, at least one of the inner intersecting belt layer group, the intermediate intersecting belt layer group, and the outer intersecting belt layer group may be replaced by the reinforcement member 1, or all thereof may be replaced by the reinforcement member 1. Additionally, in the case of a construction vehicle tire including four belt layers, either the first belt layer and the second belt layer or the third belt layer and the fourth belt layer, or both thereof can be replaced by the reinforcement member 1.

Note that, in the case of the six belt layers, in the tread widthwise direction, the width of the inner intersecting belt layer group can be from 25% to 70% of the width of the tread surface, the width of the intermediate intersecting belt layer group can be from 55% to 90% of the width of the tread surface, and the width of the outer intersecting belt layer group can be 60% to 110% of the width of the tread surface. Additionally, in the tread surface view, the inclination angle of belt cords of the inner intersecting belt layer group with respect to the carcass cords can be from 70° to 85°, the inclination angle of belt cords of the intermediate intersecting belt layer group with respect to the carcass cords can be from 50° to 75°, and the inclination angle of belt cords of the outer intersecting belt layer group with respect to the carcass cords can be from 70° to 85°.

In the construction vehicle tire 30 of the present invention, the belt layers 37 not replaced by the reinforcement member 1 include rubberized layers of reinforcement cords, and can be inclined belts having a predetermined angle with respect to the tire circumferential direction. As the reinforcement cords of the inclined belt layers, for example, metal cords, particularly, steel cords are most commonly used, but organic fiber cords may be used. Steel cords can be used that include steel filaments containing iron as a main component and various trace inclusions such as carbon, manganese, silicon, phosphorus, sulfur, copper, and chromium.

As the steel cords, besides cords formed by twisting together a plurality of filaments, steel monofilament cords may be used. Note that the twisting structures of the steel cords can also be variously designed, and various cross-sectional structures, twisting pitches, twisting directions, and distances between adjacent steel cords can be used. Additionally, cords formed by twisting together filaments different in material can also be employed, in which the cross-sectional structures thereof are not particularly limited, and various twisting structures can be employed, such as single twisting, layer twisting, and multi-twisting. Note that the reinforcement cords of the other belt layers have an inclination angle of preferably 10° or more with respect to the tire circumferential direction. Additionally, when providing the other belt layers, a maximum width inclined belt layer largest in width has a width of preferably from 90% to 115% of the tread width, and particularly preferably from 100% to 105% thereof. Note that, as illustrated, a belt under cushion rubber 38 is preferably provided on tire radial inner sides of end portions of the belt layers 37. By doing this, distortion and temperature of the end portions of the belt layers 37 can be reduced, so that durability of the tire can be improved.

In the construction vehicle tire 30 of the present invention, for the carcass 34 can employ various structures including the conventional structures, and may be either of a radial structure or of a bias structure. As the carcass 34, preferably, one or two layers of carcass ply including a steel cord layer are used. Additionally, for example, a carcass maximum width position in the tire radial direction may be closer to the bead portion 33 sides or the tread portion 31 side. For example, the maximum width position of the carcass 34 can be provided in a range of from 50% to 90% relative to a tire height on the tire radial outer sides from bead base portions. Additionally, as illustrated, the carcass 34 is typically and preferably structured so as to extend uninterruptedly between the pair of bead cores 35, but can be formed by using a pair of carcass pieces extending from the bead cores 35 and interrupted near the tread portion 31.

In addition, folded back portions of the carcass 34 can employ various structures. For example, each folded back end of the carcass 34 can be positioned on a further tire radial inner side than an upper end of the bead filler 36, or the each folded back end of the carcass 34 may be extended to a further tire radial outer side than the upper end of the bead filler 36 or the tire maximum width position, and in this case, the each folded back end thereof can be extended to a further tire widthwise inner side than a tire widthwise end of the reinforcement member 1 or the belt layers 37. Furthermore, when the carcass ply includes a plurality of layers, positions of the folded back ends of the carcass 34 in the tire radial direction can be made different. Alternatively, there may be employed a structure in which, without providing any folded back portions of the carcass 34, a plurality of bead core members sandwich the carcass 34 or a structure in which the carcass 34 is wound around the bead cores 35. Note that the cord count of the carcass 34 is typically in a range of from 5 to 60/50 mm, but not limited thereto.

In the construction vehicle tire 30 of the present invention, the structure of the sidewall portions 32 also can employ a known structure. For example, a tire maximum width position can be provided in a range of from 50% to 90% relative to a tire height on the tire radial outer sides from the bead base portion. In the construction vehicle tire 30 of the present invention, it is preferable that a recessed portion to be contacted with a rim flange is formed.

Additionally, the bead cores 35 can employ various structures such as circular shapes and polygonal shapes. Note that, as described above, the bead portions 33 may be structured such that the carcass 34 is wound around the bead cores 35 or the carcass 34 is sandwiched by the plurality of bead core members. While the bead fillers 36 are arranged on the tire radial outer sides of the bead cores 35 in the illustrated construction vehicle tire 30, the bead fillers 36 may be formed by a plurality of rubber members separated in the tire radial direction.

In the construction vehicle tire 30 of the present invention, the tread pattern may be a lug pattern, a block pattern, or an asymmetric pattern, or may have a designated rotation direction.

The lug pattern may be a pattern including widthwise grooves extending in the tire width direction from the vicinity of the equatorial plane to the ground contact ends, and, in this case, no circumferential groove has to be included.

The block pattern is a pattern including block land portions partitioned by the circumferential groove(s) and the widthwise groove(s). Particularly, in the case of a construction vehicle tire, the blocks are preferably enlarged from the viewpoint of durability. For example, the width of each block measured in the tire widthwise direction is preferably 25% to 50% of the tread width.

The asymmetric pattern is a pattern in which right and left tread patterns are asymmetric with respect to the equatorial plane. For example, in the case of a tire having a designated mounting direction, the tire may have a structure such that negative ratio is different between half portions of the tire on the inner side in the vehicle mounting direction and the outer side in the vehicle mounting direction from the equatorial plane or a structure such that the number of circumferential grooves are different between the half portions of the tire on the inner side in the vehicle mounting direction and the outer side in the vehicle mounting direction from the equatorial plane.

The tread rubber is not particularly limited. Any conventionally used rubber can be used. In addition, the tread rubber may be formed by a plurality of rubber layers different in the tire radial direction, and for example, may have a so-called cap-base structure. As the plurality of rubber layers, those different in loss tangent, modulus, hardness, glass transition temperature, material, and the like can be used. Additionally, the thickness ratio of the plurality of rubber layers in the tire radial direction may be changed in the tire widthwise direction, and only the circumferential groove bottom(s) or the like can be formed by rubber layer(s) different from the surroundings thereof.

Furthermore, the tread rubber may be formed by a plurality of rubber layers different in the tire widthwise direction, and may have a so-called divided tread structure. As the above plurality of rubber layers, those different in loss tangent, modulus, hardness, glass transition temperature, material, and the like can be used. In addition, the length ratio of the plurality of rubber layers in the tire widthwise direction may be changed in the tire radial direction, and only a limited partial region, such as only the vicinity of the circumferential groove bottom(s), only the vicinity of the tread ends, only shoulder land portions, or only a center land portion, can be formed by rubber layer(s) different from the surroundings thereof.

In the construction vehicle tire 30, it is preferable that the tread portion 31 has a thicker rubber gauge, from the viewpoint of durability. The rubber gauge is preferably from 1.5% to 4% of a tire outer diameter, and more preferably from 2% to 3% thereof. Additionally, a ratio (negative ratio) of a groove area to the ground contact surface of the tread portion 31 is preferably 20% or less. This is because the construction vehicle tire 30 is mainly used at low speed and in an arid region, and thus it is unnecessary to increase the negative ratio for drainage. As for the tire sizes of construction vehicle tires, for example, rim diameter is 20 inches or more, and particularly, for large tires, rim diameter is 40 inches or more.

### EXAMPLES

Hereinafter, the present invention will be described in more detail by using Examples.

A reinforcement member including a plate-like body made of polyester resin as a core material layer (thickness: 1.6 mm, whose end portions in the widthwise direction of the reinforcement member have been chamfered by cutting into a semicircular cross-section) and a spiral cord layer (cord angle: 20° with respect to a tire circumferential direction) including a reinforcement cord made of carbon fiber spirally wound around the outside thereof was applied to a truck and bus tire, as illustrated in FIG. 5, to produce a test tire of Example. Additionally, a test tire for Comparative Example was produced in the same manner as Example, except for use of a single core material cord layer (thickness: 1.6 mm, cord angle: 50° with respect to a tire circumferential direction) obtained by coating a steel cord used as a core material cord with rubber, instead of the core material layer.

Traveling durability tests were conducted using the obtained respective test tires, which confirmed that the tire of Example had increased tire longevity as compared with the tire of Comparative Example.

### DESCRIPTION OF SYMBOLS

- 1: Reinforcement member
- 2: Core material layer
- 2A, 2B: End portion of core material layer in widthwise direction of reinforcement member
- 3: Spiral cord layer
- 3a: Reinforcement cord
- 10: Passenger vehicle tire
- 11, 21, 31: Tread portion
- 12, 22, 32: Sidewall portion
- 13, 23, 33: Bead portion
- 13a: Recessed portion
- 14, 24, 34: Carcass
- 15, 25 35: Bead core
- 16, 26, 36: Bead filler
- 17: Belt reinforcing layer
- 17a: Cap layer
- 17b: Layered layer
- 20: Truck and bus tire
- 21a: Corner portion
- 27, 37, 37a to 37d: Belt layer
- 28, 38: Belt under cushion rubber
- 30: Construction vehicle tire

## Claims

1. A reinforcement member comprising a core material layer and a spiral cord layer including a reinforcement cord spirally wound around the core material layer, **characterized in that** the core material layer comprises a plate-like body made of a resin material with an end portion of the plate-like body in a widthwise direction of the reinforcement member being chamfered.

2. The reinforcement member according to claim 1, wherein the end portion of the plate-like body in the widthwise direction of the reinforcement member is cut into a semicircular cross-section.

3. The reinforcement member according to claim 1, wherein the end portion of the plate-like body in the widthwise direction of the reinforcement member is melt-processed.

4. The reinforcement member according to any one of claims 1 to 3, wherein the reinforcement member is a tire reinforcement member

5. A tire **characterized by** using the reinforcement member according to any one of claims 1 to 4.
